(19) Europäisches Patentamt
European Patent Office
Office européen des brevets

(11) EP 1 316 680 A2

(12) **EUROPEAN PATENT APPLICATION**

(43) Date of publication:
**04.06.2003 Bulletin 2003/23**

(51) Int Cl.$^7$: **F01K 27/00**

(21) Application number: **02292980.6**

(22) Date of filing: **03.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **03.12.2001 KR 2001075913**

(71) Applicant: **Kim, Chang Sun**
**Incheon-shi 405-100 (KR)**

(72) Inventor: **Kim, Chang Sun**
**Incheon-shi 405-100 (KR)**

(74) Representative: **Portal, Gérard et al**
**Cabinet Beau de Loménie**
**158, rue de l'Université**
**75340 Paris Cédex 07 (FR)**

(54) **Method for generating energy by using exothermic reaction of metal**

(57) Disclosed herein is a method for generating energy by using exothermic reaction of metal, comprising the steps of reacting an oxidant containing mostly water with combustion substances mainly containing light metals to generate hydrogen; reacting generated hydrogen with nitric acid, sulfuric acid, chlorine peroxide, metal nitrate, metal perchlorate, metal sulfate, and hydrogen peroxide to generate water and heat; continuously repeating the above two steps with the use of water to gradually increase explosive power, and to a method for utilizing generated energy. The method can generate increased amounts of energy by repeatedly reacting oxidants such as water, liquid acid, and metal salt with combustion substances containing mostly light metals, and has economic advantages in that inexpensive substances such as light metal and oil are used as combustion substances.

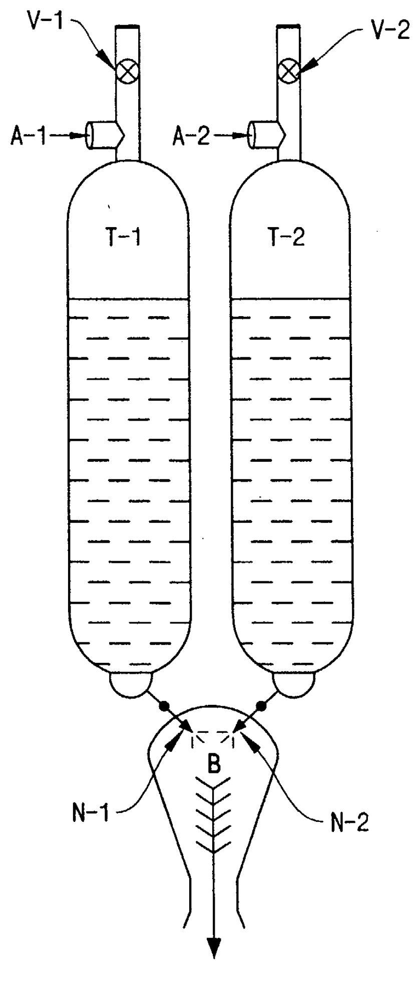


Fig. 1

EP 1 316 680 A2

## Description

BACKGROUND OF THE INVENTION

1. Field of the invention

The present invention relates to a method for generating energy by using an exothermic reaction of metal, which improves a principle of the metal fuel propulsive body according to claim 2 in U. S. Pat. No. 6,237,340B1, "Method for reusing a substance's thermal expansion energy" issued to the present inventor.

Particularly, the present invention pertains to a method for generating energy by using an exothermic reaction of metal, comprising the steps of reacting oxidants containing mostly water with combustion substances containing mostly light metal to generate hydrogen; reacting generated hydrogen with nitric acid, sulfuric acid, chlorine peroxide, metal nitrate, metal perchlorate, metal sulfate, and hydrogen peroxide to generate water and heat; continuously repeating the above two steps with the use of generated water to gradually increase explosive power, and to a method for utilizing generated energy (explosive power).

2. Description of the Prior Art

Generally, an exothermal reaction can be used as propulsive energy in a rocket. For example, conventionally, the propulsive energy in a rocket is obtained by an explosion, which is generated by reacting source substances of explosive energy such as liquid oxygen, hydrogen peroxide, liquid hydrogen, ammonia, gas for combustion, oil fuel, explosives, gun powders with nonmetal substances and organic substances.

However, the prior technology as described above, has disadvantages in that the source substances of explosive energy are expensive and have a large volume and a heavy weight.

SUMMARY OF THE INVENTION

Therefore, it is an object of the present invention to avoid disadvantages of the prior arts, and to provide a method for generating energy by using an exothermic reaction of metal, comprising the steps of reacting an oxidant containing mostly water with a combustion substance containing mostly light metal to generate hydrogen; reacting generated hydrogen with nitric acid, chlorine peroxide, sulfuric acid, metal nitrate, metal perchlorate, metal sulfate, and hydrogen peroxide to generate energy. The method provides energy using light and inexpensive substances.

It is another object of the present invention to provide a method for economically generating energy by using an exothermic reaction of metal with the use of inexpensive metals, which can be applied to crush a structure or a rock bed without a large explosion noise or the scattering of crushed debris.

BRIEF DESCRIPTION OF THE DRAWINGS

The figures in the accompanying drawings depict various elements corresponding to the subject invention. Like reference numerals in the drawings refer to like elements.

Figure 1 is a pictorial view of material mixture instrument.

Figure 2 is a pictorial view of high-energy generated instrument by using shock heat.

DETAILED DESCRIPTION OF THE INVENTION

A better understanding of the present invention may be obtained in light of the following examples which are set forth to illustrate, but are not to be construed to limit the present invention.

EXAMPLE 1

460 kg of dissolved sodium (Na) was placed into a combustion material tank T-1, which was then maintained at 150 °C. Under a closed state of a locking valve V-1, the tank was pressurized to the required pressure of 30 kgf/$cm^2$ or higher using inert gas (argon, nitrogen, etc.) through the pressurization port A-1. Separately, 340 kg of sodium nitrate ($NaNO_3$) was dissolved in 180 kg or higher, actually 280 kg of water ($H_2O$) and added to an oxidant material tank T-2, after which a locking valve V-2 was closed and the tank was pressurized to 30 kgf/$cm^2$ or higher, the required pressure, using air through the pressurization port A-2. The materials in both tanks were sprayed to a reaction chamber B through each tank nozzle N-1, N-2, based on a spray ratio of 4.6:6.2. As such, the sprayed materials reacted exothermically to increase temperature and pressure within the reaction chamber, resulting in the explosive production of

280 kg of gas at a high temperature. If sprayed with created salt, the injection power was more increased as a result of increasing density of gas. As another oxidant material, magnesium nitrate ($Mg(NO_3)_2$) was used. A concrete reaction is as follows.

<Equation 1a> (separated reaction)

$$(2NaNO_3 + 10H_2O) + \xrightarrow[\text{Injection of liquefied 10Na}]{\text{low temp. } 1^{st}\text{explosion rxn.}} 2NaNO_3 + 10\ NaOH + 5H_2 \xrightarrow{\text{high temp. (700}^{\circ}\text{C or more) } 2^{nd}\text{ explosion rxn.}}$$

$$6Na_2O + 10H_2O + N_2 + \xrightarrow[\text{Injection of liquefied 10Na}]{\text{high temp. (900}^{\circ}\text{C or more) } 3^{rd}\text{ explosion rxn.}} 6Na_2O + 10NaOH + N_2 + 5H_2 + \uparrow_{\text{Injection of liquefied } 2NaNO_3}$$

$$\xrightarrow{\text{high temp. (1000}^{\circ}\text{C or more) } 4^{th}\text{ explosion rxn.}} 12Na_2O + 2N_2 + 10H_2O\ ;\ \text{continue}$$

<Equation 1b> (integrated reaction)

$$(2NaNO_3 + 10H_2O) + \xrightarrow[\text{Injection of liquefied 10Na}]{1^{st}\text{ to }4^{th}\text{ energy integration explosion}} 6Na_2O + 5H_2O + N_2$$

<Equation 1c> (integrated reaction)

$$2Mg(NO_3)_2 + 10H_2O + \xrightarrow[\text{Injection of liquefied 20Na}]{1^{st}\text{ to }4^{th}\text{ energy integration explosion}} 10Na_2O + 2MgO + 10H_2O + 2N_2$$

EXAMPLE 2

736 kg of dissolved sodium (Na) was added to a combustion material tank T-1, which was then maintained at 150 °C. A locking valve V-1 was closed, and the tank was pressurized to the required pressure of 30 kgf/cm$^2$ or higher using inert gas (argon, nitrogen, etc.) through the pressurization port A-1. Then, 492 kg of sodium perchlorate ($NaClO_4$) was dissolved in 288 kg or higher, actually 388 kg of water ($H_2O$) and added to an oxidant material tank T-2, after which a locking valve V-2 was closed and the tank was pressurized to 30 kgf/cm$^2$ or higher, the required pressure, using air through the pressurization port A-2. The materials in both tanks were sprayed to a reaction chamber B through each tank nozzle N-1, N-2, based on a spray ratio of 7.36:8.8. As such, temperature and pressure in the reaction chamber were increased by exothermic reaction, explosively yielding 388 kg of gas at a high temperature. If

sprayed with created salt, the injection power was more increased as a result of increasing density of gas. A concrete reaction is shown, below.

<Equation 2a> (separated reaction)

$$(2NaClO_4 + 14H_2O) + \xrightarrow{\text{low temp. } 1^{st} \text{ explosion rxn.}} 2NaClO_4 + 14NaOH + 7H_2 \xrightarrow{\text{high temp.(700°C or more) } 2^{nd} \text{ explosion rxn.}}$$

Injection of liquefied 14Na

$$(8Na_2O + Cl_2 + 14H_2O) + \xrightarrow{\text{high temp.(900°C or more) } 3^{rd} \text{ explosion rxn.}} (8Na_2O + Cl_2 + 14NaOH + 7H_2)$$

Injection of liquefied 14Na

$$\xrightarrow{\text{high temp.(1000°C or more) } 4^{th} \text{ explosion rxn.}} + \; 16Na_2O + 2Cl_2 + 14H_2O \text{ ; continue}$$

Injection of $2NaClO_4$

<Equation 2b> (integrated reaction)

$$(2NaClO_4 + 7H_2O) + \xrightarrow{1^{st} \text{ to } 4^{th} \text{ energy integration explosion}} 8Na_2O + 7H_2O + Cl_2$$

Injection of liquefied 14Na

EXAMPLE 3

460 kg of dissolved sodium (Na) was added to a combustion material tank T-1, which was then maintained at 150 °C. Under a closed state of a locking valve V-1, the tank was pressurized to the necessary pressure of 30 kgf/ $cm^2$ or higher using inert gas (argon, nitrogen, etc.) through the pressurization port A-1. Separately, 252 kg of nitric acid ($HNO_3$) was dissolved in 162 kg or higher, actually 262 kg of water ($H_2O$) and charged into an oxidant material tank T-2. A locking valve V-2 was closed before the tank was pressurized to 30 kgf/$cm^2$ or higher, the required pressure, using air through the pressurization port A-2. The materials in both tanks were sprayed to a reaction chamber B through each tank nozzle N-1, N-2, on the basis of a spray ratio of 4.6:5.14. As such, temperature and pressure within the reaction chamber was increased by exothermic reaction, 354 kg of gas was explosively produced at a high temperature. If sprayed with created salt, the injection power was more increased as a result of increasing density of gas. A concrete reaction is shown, below.

<Equation 3a> (separated reaction)

$$(2HNO_3 + 9H_2O) + \uparrow \xrightarrow{\text{low temp. } 1^{st} \text{ explosion rxn.}} 2NaNO_3 + 8NaOH + 5H_2 + H_2O \xrightarrow{\text{high temp.(700°C or more) } 2^{nd} \text{ explosion rxn.}}$$

Injection of liquefied 10Na

$$(5Na_2O + N_2 + 10H_2O) + \uparrow \xrightarrow{\text{high temp.(900°C or more) } 3^{rd} \text{ explosion rxn.}} (5Na_2O + N_2 + 10NaOH + 5H_2) + \uparrow$$

Injection of liquefied 10Na

Injection of liquefied $2HNO_3$

$$\xrightarrow{\text{high temp.(1000°C or more) } 4^{th} \text{ explosion rxn.}} 10Na_2O + 11H_2O + 2N_2\text{; continue}$$

<Equation 3b> (integrated reaction)

$$(4HNO_3 + 9H_2O) + \uparrow \xrightarrow{1^{st} \text{ to } 4^{th} \text{ energy integration explosion}} 10Na_2O + 11H_2O + 2N_2$$

Injection of liquefied 20Na

EXAMPLE 4

736 kg of dissolved sodium (Na) was added into a combustion material tank T-1, which was then maintained at 150 °C. Under a closed state of a locking valve V-1, the tank was pressurized to the required pressure of 30 kgf/ $cm^2$ or higher using inert gas (argon, nitrogen, etc.) through the pressurization port A-1. Separately, 404 kg of perchloric acid ($HClO_4$) was dissolved in 270 kg or higher, actually 370 kg of water ($H_2O$) and added to an oxidant material tank T-2. Thereafter, a locking valve V-2 was closed and the tank was pressurized to 30 kgf/$cm^2$ or higher, the required pressure, using air through the pressurization port A-2. The materials in both tanks were sprayed to a reaction chamber B through each tank nozzle N-1, N-2, based upon a spray ratio of 7.36:7.74. As such, the sprayed materials reacted exothermically to increase temperature and pressure in the reaction chamber, 406 kg of gas was explosively produced at a high temperature. If sprayed with created salt, the injection power was more increased as a result of increasing density of gas. A concrete reaction is given, below.

<Equation 4a> (separated reaction)

$$(2HClO_4 + 14H_2O) + \uparrow \xrightarrow[\text{}]{\text{low temp. } 1^{st} \text{ explosion rxn.}} 2NaClO_4 + 14NaOH + 8H_2 \xrightarrow{\text{high temp.(700°C or more) } 2^{nd} \text{ explosion rxn.}}$$

Injection of liquefied 16Na

$$(8Na_2O + 14H_2O + Cl_2 + H_2) + \uparrow \xrightarrow{\text{high temp.(900°C or more) } 3^{rd} \text{ explosion rxn.}} (8Na_2O + 12NaOH + 7H_2 + 2H_2O + Cl_2) + \uparrow$$

Injection of liquefied 12Na

Injection of $2HClO_4$

$$\xrightarrow{\text{high temp.(1000°C or more) } 4^{th} \text{ explosion rxn.}} 14Na_2O + 16H_2O + 2Cl_2; \text{ continue}$$

<Equation 4b> (integrated reaction)

$$(2HClO_4 + 7H_2O) + \uparrow \xrightarrow{1^{st} \text{ to } 4^{th} \text{ energy integration explosion}} 7Na_2O + 8H_2O + Cl_2$$

Injection of liquefied 14Na

EXAMPLE 5

276 kg of dissolved sodium (Na) was added to a combustion material tank T-1, which was then maintained at 150 °C. Under a closed state of a locking valve V-1, the tank was pressurized to the required pressure of 30 kgf/cm$^2$ or higher using inert gas (argon, nitrogen, etc.) through the pressurization port A-1. Separately, 196 kg of sulfuric acid ($H_2SO_4$) was dissolved in 90 kg or higher, actually 190 kg of water ($H_2O$) and added to an oxidant material tank T-2. Thereafter, a locking valve V-2 was closed and the tank was pressurized to 30 kgf/cm$^2$ or higher, the required pressure, using air through the pressurization port A-2. The materials in both tanks were sprayed to a reaction chamber B through each tank nozzle N-1, N-2, based upon a spray ratio of 2.76:3.86. As such, the sprayed materials reacted exothermically and thus temperature and pressure in the reaction chamber were increased, explosively yielding 226 kg of gas at a high temperature. If sprayed with created salt, the injection power was more increased as a result of increasing density of gas. A concrete reaction is given, below.

<Equation 5a> (separated reaction)

$$H_2SO_4 + 5H_2O + \underset{\text{Injection of liquefied 6Na}}{\uparrow} \xrightarrow[]{\text{low temp. } 1^{st} \text{ explosion rxn.}} Na_2SO_4 + 4NaOH + 3H_2 + H_2O \xrightarrow[]{\text{high temp.(700℃ or more) } 2^{nd} \text{ explosion rxn.}}$$

$$3Na_2O + 6H_2O + S + \underset{\text{Injection of liquefied 6Na}}{\uparrow} \xrightarrow[]{\text{high temp.(900℃ or more) } 3^{rd} \text{ explosion rxn.}} 3Na_2O + 6NaOH + 7H_2 + S + \underset{\text{Injection of liquefied } H_2SO_4}{\uparrow}$$

$$\xrightarrow[]{\text{high temp.(1000℃ or more) } 4^{th} \text{ explosion rxn.}} 6Na_2O + 7H_2O + 2S \text{ ; continue}$$

<Equation 5b> (integrated reaction)

$$2H_2SO_4 + 5H_2O + \underset{\text{Injection of liquefied 12Na}}{\uparrow} \xrightarrow[]{1^{st} \text{ to } 4^{th} \text{ energy integration explosion}} 6Na_2O + 7H_2O + 2S$$

EXAMPLE 6

The reactions are oxidants, reactive metal and nonmetal combustion materials, 522 kg of dissolved sodium (Na) was added to a combustion material tank T-1, which was then maintained at 150 °C. Under a closed state of a locking valve V-1, the tank was pressurized to the required pressure of 30 kgf/cm$^2$ or higher using inert gas (argon, nitrogen, etc.). Then, 606 kg of perchloric acid ($HClO_4$) was dissolved in 216 kg or higher, actually 316 kg of water ($H_2O$) and added to an oxidant material tank T-2. Thereafter, a locking valve V-2 was closed and the tank was pressurized to 30 kgf/cm$^2$ or more, the required pressure, using air. Further, as a nonmetal combustion material, 424 kg of ammonia was filled into a material tank, and a locking valve was closed before the tank was pressurized to the required pressure or higher. The materials in the tanks were sprayed to a reaction chamber through each tank nozzle, on the basis of a predetermined spray ratio. As such, temperature and pressure in the reaction chamber were increased upon addition of an oxidant material, an active metal as a combustion material and a nonmetal combustion material, 698 kg of gas was explosively produced at a high temperature. As other oxidant materials, use was made of nitric acid ($HNO_3$), sodium nitrate ($NaNO_3$), aluminum nitrate ($Al(NO_3)_3$) and so on. Meanwhile, as other nonmetal combustion materials, a fuel oil ($CH_4$) , hydrogen ($H_2$) and the like were used. If sprayed with created salt, the injection power was more increased as a result of increasing density of gas. A concrete reaction is given, below.

<Equation 6a> (integrated reaction)

$$6HClO_4 + 12H_2O + \uparrow + \uparrow \xrightarrow{1^{st}\text{ to }4^{th}\text{ energy integration explosion}} 9Na_2O + 27H_2O + 3Cl_2 + 4N_2$$

Injection of liquefied 18Na; Injection of $8NH_3$

<Equation 6b> (integrated reaction)

$$6HClO_4 + 12H_2O + \uparrow + \uparrow \xrightarrow{1^{st}\text{ to }4^{th}\text{ energy integration explosion}} 9Na_2O + 21H_2O + 3CO_2 + 3Cl_2$$

Injection of liquefied 18Na; Injection of $3CH_4$

<Equation 6c> (integrated reaction)

$$6HNO_3 + 12H_2O + \uparrow + \uparrow \xrightarrow{1^{st}\text{ to }4^{th}\text{ energy integration explosion}} 6Na_2O + 24H_2O + 6N_2$$

Injection of liquefied 12Na; Injection of $6NH_3$

<Equation 6d> (integrated reaction)

$$4NaNO_3 + 8H_2O + \uparrow + \uparrow \xrightarrow{1^{st}\text{ to }4^{th}\text{ energy integration explosion}} 6Na_2O + 14H_2O + 4N_2$$

Injection of liquefied 8Na; Injection of $4NH_3$

<Equation 6e> (integrated reaction)

1st to 4th energy integration explosion

$$2Al(NO_3)_3 + 18H_2O + \uparrow + \uparrow \longrightarrow Al_2O_3 + 9Na_2O + 24H_2O + 5N_2$$

Injection of liquefied 18Na

Injection of $4NH_3$

<Equation 6f> (integrated reaction)

1 to 4 energy integration explosion

$$2Al(ClO_4)_3 + 20H_2O + \uparrow + \uparrow \longrightarrow Al_2O_3 + 10Na_2O + 31H_2O + 3Cl_2$$

Injection of liquefied 20Na

Injection of $11H_2$

<Equation 6g> (integrated reaction)

1 to 4 energy integration explosion

$$2LiNO_3 + 3H_2O_2 + 5H_2O + \uparrow + \uparrow \longrightarrow Li_2O + 6Na_2O + 10H_2O + N_2$$

Injection of liquefied 12Na

Injection of $2H_2$

EXAMPLE 7

Powders of a metal were mixed with powders of a metal salt, without use of water, and subjected to shock heat to generate chain-reactions. As such, little gas was generated and gaseous expansion reaction of the metal and the metal salt occurred. 170 g of sodium nitrate ($NaNO_3$) powder and 145 g of magnesium (Mg) powder were thoroughly mixed and added to a preparative container, after which the container was sealed. When power was supplied to electrodes P-1 and P-2 as illustrated in fig. 2 for a moment, spark was generated by an internal resistance wire R-1. Through exothermic chain reactions initiated by such spark, the metal salt was gasified, producing high energy under high pressure. As other powders of metal, use was made of aluminum(Al) and so on. Meanwhile, as other powders of metal salt, sodium perchlorate($NaClO_4$), sodium sulfate($Na_2SO_4$), iron oxide($Fe_2O_3$), copper oxide(CuO) and the like singleness or mixture were used. A concrete reaction is given, below.

<Equation 7a>

high temp. ignition

$$2NaNO_3 + 5Mg \uparrow \longrightarrow Na_2Mg_5O_6 + N_2$$

; expansion by gasification

1000℃ shock heat

<Equation 7b>

$$2NaNO_3 + 2CuO + 4Mg \xrightarrow[\text{1000℃ shock heat}]{\text{high temp. ignition}} 2NaCuMg_2O_4 + N_2 \text{ ; expansion by gasification}$$

<Equation 7c>

$$2NaClO_4 + 2Fe_2O_3 + 4Al \xrightarrow[\text{1000℃ shock heat}]{\text{high temp. ignition}} 2NaAl_2Fe_2O_7 + Cl_2 \text{ ; expansion by gasification}$$

<Equation 7d>

$$Na_2SO_4 + CuO + 2Al \xrightarrow[\text{1000℃ shock heat}]{\text{high temp. ignition}} Na_2CuAl_2O_5 + S \text{ ; expansion by gasification}$$

<Equation 7e>

$$2NaNO_3 + 2CuSO_4 + 8Al \xrightarrow[\text{1000℃ shock heat}]{\text{high temp. ignition}} 2NaCuAl_4O_7 + 2S + N_2 \text{ ; expansion by gasification}$$

Example 7 is characterized in that a bond reaction is continuously conducted by adding a shock heat to reactions 7a to 7e to generate high temperature energy. The high temperature energy expands a small amount of a certain gas and gasifies the metal salt, thereby causing significant expansion of products, but having excellent expansion effect only in the small sealant space because the expansion limitation is low. Therefore, these reactions can be used to crush a rock bed without a large explosion noise or scattering of debris, and are less harmful to the environment and humans over conventional methods.

< Substances used in the present invention >

A: Metal nitrates

Sodium nitrate ($NaNO_3$), potassium nitrate ($KNO_3$), lithium nitrate ($LiNO_3$), calcium nitrate ($Ca(NO_3)_2$), magnesium nitrate ($Mg(NO_3)_2$), aluminum nitrate ($Al(NO_3)_3$), barium nitrate ($Ba(NO_3)_2$), iron nitrate ($Fe(NO_3)_3$), manganese nitrate ($Mn(NO_3)_2$), copper nitrate ($Cu(NO_3)_2$), and the like.

B: Metal perchlorates

Potassium perchlorate ($KClO_4$), sodium perchlorate ($NaClO_4$), lithium perchlorate ($LiClO_4$), calcium perchlorate ($Ca(ClO_4)_2$), magnesium perchlorate ($Mg(ClO_4)_2$), strontium perchlorate ($Sr(ClO_4)_2$), barium perchlorate ($Ba(ClO_4)_2$), iron perchlorate ($Fe(ClO_4)_3$), manganese perchlorate ($Mn(ClO_4)_2$), copper perchlorate ($Cu(ClO_4)_2$), aluminum perchlorate ($Al(ClO_4)_3$), zinc perchlorate ($Zn(ClO_4)_2$), and the like.

C: Metal oxides

Potassium oxide ($K_2O$), sodium oxide ($Na_2O$), lithium oxide ($Li_2O$), calcium oxide (CaO), copper oxide (CuO), magnesium oxide (MgO), strontium oxide (SrO), barium oxide (BaO), iron oxide ($Fe_2O_3$), manganese oxide ($MnO_2$), zinc oxide (ZnO), and the like.

D: Metal sulfates

Potassium sulfate ($K_2SO_4$), sodium sulfate ($Na_2SO_4$), lithium sulfate ($Li_2SO_4$), strontium sulfate ($SrSO_4$), calcium sulfate ($CaSO_4$), magnesium sulfate ($MgSO_4$), barium sulfate ($BaSO_4$), iron sulfate ($Fe_2(SO_4)_3$), manganese sulfate ($MnSO_4$), copper sulfate ($CuSO_4$), aluminum sulfate ($Al_2(SO_4)_3$), zinc sulfate ($ZnSO_4$), and the like.

E: Liquid oxidants

Water ($H_2O$), hydrogen peroxide ($H_2O_2$), nitric acid ($HNO_3$), perchloric acid ($HClO_4$), sulfuric acid ($H_2SO_4$), and the like.

F: Combustion substances (Light metals)

A lump type or a powder type of a reactive metal such as potassium (K), lithium (Li), sodium (Na), magnesium (Mg), titanium (Ti), calcium (Ca), aluminum (Al), and chrome (Cr).

G: Other additives

Combustible nonmetal such as hydrogen ($H_2$), ammonia ($NH_3$), oil for combustion, toluene, benzene, petroleum, hydrocarbons.

In examples 1 to 5, oxidants such as water, hydrogen peroxide, nitric acid, perchloric acid, sulfuric acid, metal nitrate, metal sulfate, and metal perchlorate are directly reacted with reactive metals as combustion substances. These bond reactions comprise an A type reaction in which gas expansion pressure is raised stepwise and a B type reaction in which the bond reaction is integrally carried out, and provides energy, for example a propulsive force of a rocket, by use of expansion pressure of the substances and water upon supplying heat energy to the substances and water.

In equations 6a to 6f, the oxidant such as water, hydrogen peroxide, nitric acid, sulfuric acid, metal nitrate, metal perchlorate, and metal sulfate is reacted with the reactive metal and combustible nonmetal to generate an explosion energy.

The present invention provides a method for increasing energy by repeating a bond reaction of oxidants such as water, hydrogen peroxide, liquid acid, metal salt with light metal such as combustion substances. The method has economic advantages in that inexpensive substances such as light metal and oil are used as the combustion substance.

Furthermore, it can be seen from equation 7 that the method can be used to crush a structure or a rock bed without a large explosion noise or the scattering of debris.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

**1.** A method for generating an explosion energy by using an exothermic reaction of metal, comprising:

a first reaction process in which an elementary oxidant based on water is reacted with a combustion substance based on light metal to generate hydrogen;

a second reaction process in which the hydrogen generated from the 1st reaction is reacted with an oxidant to generate water, said oxidant being selected from the group consisting of nitric acid, chlorine peroxide, sulfuric acid, metal nitrate, metal perchlorate, metal sulfate, hydrogen peroxide, and combinations thereof;
a third reaction process in which the water generated from the 2nd reaction is reacted with a light metal element to generate hydrogen, said light metal element being selected from the group consisting of potassium (K), lithium (Li), sodium (Na), magnesium (Mg), titanium (Ti), calcium (Ca), aluminum (Al), chrome (Cr), and combinations thereof;
a fourth reaction process in which the hydrogen generated from the 3rd reaction is reacted with an oxidant selected from the group consisting of nitric acid, chlorine peroxide, sulfuric acid, metal nitrate, metal perchlorate, metal sulfate, hydrogen peroxide and combinations thereof,

wherein said second and third reaction process are carried out in a repeating and consecutive manner.

**2.** The method according to claim 1, wherein combustion substances are a lump or a powder of reactive metals comprising potassium (K), lithium (Li), sodium (Na), magnesium (Mg), titanium (Ti), calcium (Ca), aluminum (Al), and chrome (Cr).

**3.** The method according to claim 1, wherein combustion substances combined with nonmetals comprising hydrogen ($H_2$), ammonia ($NH_3$), oil for combustion, toluene, benzene, petroleum, hydrocarbons, and reactive metals comprising potassium (K), lithium (Li), sodium (Na), magnesium (Mg), titanium (Ti), calcium (Ca), aluminum (Al), and chrome (Cr) are used.

**4.** A method for generating an explosion energy by using exothermic reaction of metal, comprising the oxidization of an combustion substance comprising at least two light metal elements with an elementary oxidant selected from the group consisting of water, hydrogen peroxide, metal nitrate, metal sulfate, metal perchlorate, nitric acid, sulfuric acid, and chlorine peroxide, wherein the oxidant and the combustion substance are controlled in such stoichiometrical quantities that the oxidation is performed in one phase.

**5.** A method for generating a limited expansion energy by using exothermic reaction of metal, comprising a chain reaction of a powdered oxidant and at least two light metal elements in a closed volume with supply of shock heat, said powdered oxidant being selected from the group consisting of metal nitrate, metal perchlorate, metal oxide, and metal sulfate, said light metal element being selected from the group consisting of potassium (K), lithium (Li), sodium (Na), magnesium (Mg), titanium (Ti), calcium (Ca), aluminum (Al), and chrome (Cr), whereby a large pressure can be generated, applicable to crush a structure or a rock bed without a large explosion noise or the scattering of debris.

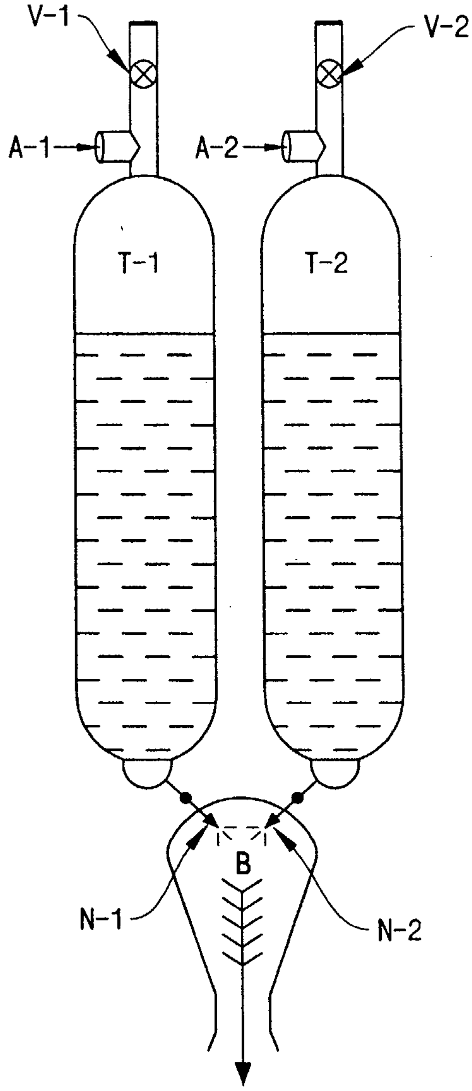


Fig. 1

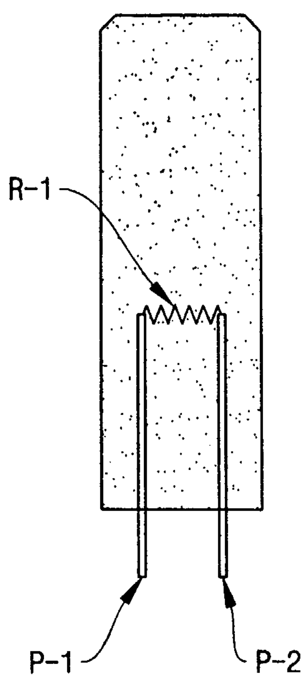


Fig. 2